# EUROPÄISCHE PATENTANMELDUNG

(11) **EP 2 650 581 A1**
(43) Veröffentlichungstag der Anmeldung: **16.10.2013**
(21) Anmeldenummer: 12163783.9
(22) Anmeldetag: 11.04.2012
(51) Int. Cl.: F16L 37/46

(54) **Steckanschluss sowie Zuführanschlussteil**

(71) Anmelder: Lothar Schulz - Mechanik GmbH, 66450 Bexbach (DE)
(72) Erfinder: Kees, Ulrich, 66424 Homburg (DE)
(74) Vertreter: Wieske, Thilo

(57) **Zusammenfassung**

Zuführanschlussteil (1), wobei das Zuführanschlussteil (1) Verbindungsmittel (2) aufweist zur Verbindung des Zuführanschlussteils (1) mit einer Zuführvorrichtung für gasförmige Medien, wobei das Zuführanschlussteil (1) Aufnahmemittel (11) aufweist zur Aufnahme eines Gegenanschlussteils, wobei dem Zuführanschlussteil (1) wenigstens ein Betätigungselement (7) zugeordnet ist, wobei in einer ersten Position des wenigstens einen Betätigungselementes (7) Blockademittel (12) der Aufnahmemittel (11) des Zuführanschlussteils (1) ein mechanisches Lösen eines in die Aufnahmemittel (11) eingesetzten Gegenanschlussteils verhindern, wobei in dieser ersten Position weiterhin Durchlassmittel geöffnet sind (5, 18, 16) zur Abgabe des gasförmigen Mediums über das Zuführanschlussteil (1) in ein eingesetztes Gegenanschlussteil, wobei in einer zweiten Position des wenigstens einen Betätigungselementes (7) das Zuführanschlussteil (1) gegen eine Abgabe des gasförmigen Mediums gesperrt ist (5, 6, 9, 10) und die Blockademittel (12) der Aufnahmemittel (11) gelöst sind, wobei das wenigstens eine Betätigungsmittel (7) eine Zwischenposition aufweist, in der das Zuführanschlussteil (1) gegen eine Abgabe des gasförmigen Mediums gesperrt ist (5, 6, 9, 10), in der weiterhin die Blockademittel (12) der Aufnahmemittel (11) des Zuführanschlussteils (1) ein mechanisches Lösen eines in die Aufnahmemittel (11) eingesetzten Gegenanschlussteils verhindern und in der ein in die Aufnahmemittel (11) eingesetztes Gegenanschlussteil mit der umgebenden Atmosphäre verbunden ist.

## Beschreibung

Die vorliegende Erfindung betrifft einen Steckanschluss nach dem Oberbegriff des Anspruchs 1 sowie ein Zuführanschlussteil nach dem Oberbegriff des Anspruchs 2.

Im Bereich der pneumatischen Antriebe ist es bekannt, beispielsweise in Werkhallen von Betrieben eine pneumatische Versorgungsleitung vorzusehen, die als Stammleitung geführt ist. Von dieser Stammleitung gehen Stichleitungen zu den einzelnen Arbeitsplätzen ab. Am Ende dieser Stichleitungen sind an den Arbeitsplätzen jeweils Zuführanschlussteile angebracht. Diese Zuführanschlussteile weisen ein Aufnahmeteil auf für ein Gegenanschlussteil. Dieses Gegenanschlussteil ist ein pneumatischer Stecker, der an einer zu einem pneumatischen Verbraucher führenden Leitung angeschlossen ist. Mittels dieses Gegenanschlussteils wird der pneumatische Verbraucher durch ein Einstecken in das Zuführanschlussteil mit der pneumatischen Versorgungsleitung verbunden.

Die Gegenanschlussteile der Verbraucher sind so ausgeführt, dass diese ein Rohrstück aufweisen, das an seiner Außenfläche eine ringförmige Nut aufweist, in die mechanische Blockademittel eingreifen können zur mechanischen Halterung des Gegenanschlussteils.

Die heute verbreiteten Zuführanschlussteile sind so aufgebaut, dass diese ein Rückschlagventil aufweisen. Durch dieses Rückschlagventil wird die pneumatische Versorgungsleitung gesperrt, wenn kein Gegenanschlussteil in die Aufnahmemittel des Zuführanschlussteils eingesteckt ist. Dieser verbreitete Stand der Technik bringt gewisse Probleme mit sich. Zum einen muss beim Einstecken eines Gegenanschlussteils in die Aufnahmemittel des Zuführanschlussteils das Gegenanschlussteil gegen den auf dem Rückschlagventil anstehenden Druck der pneumatischen Versorgungsleitung geöffnet werden. Dies erfordert eine vergleichsweise große Kraft bereits bei Leitungsquerschnitten von ¼".

Bei noch größeren Leitungsquerschnitten ist es durchaus üblich, vor dem Zuführanschlussteil nochmals einen Kugelhahn vorzusehen, über den zum einen die pneumatische Versorgungsleitung auf dem Teilstück zwischen dem Kugelhahn und dem Zuführanschlussteil von der pneumatischen Versorgung getrennt werden kann. Weiterhin ist ein Entlüftungsventil vorhanden zur Entlüftung dieses genannten Teilstücks. Durch das Entlüften wird das Einsetzen des Gegenanschlussteils in die Aufnahmemittel des Zuführanschlussteils erleichtert. Nach dem Anschluss des Gegenanschlussteils wird bei geschlossenem Entlüftungsventil der Kugelhahn wieder geöffnet, so dass der pneumatische Systemdruck dann an dem Verbraucher ansteht.

Bei den bekannten pneumatischen Anschlüssen ergibt sich ein weiteres Problem beim Lösen des Gegenanschlussteils von dem Zuführanschlussteil. Bei noch anstehendem pneumatischem Druck erfolgt beim mechanischen Lösen des Gegenanschlussteils vom Zuführanschlussteil ein Effekt, der als Peitschenknall bezeichnet wird. Da das Gegenanschlussteil mechanisch von dem Zuführanschlussteil gelöst ist, wird dieses durch den noch anstehenden pneumatischen Druck schlagartig abgedrückt. Um zu verhindern, dass das Gegenanschlussteil in Folge unkontrollierter Bewegung durch dieses Abdrücken eventuell umstehende Personen verletzt, muss dieses beim mechanischen Lösen konzentriert und mit vergleichsweise großer Kraft festgehalten werden.

Das Gegenanschlussteil wird mechanisch von dem Zuführanschlussteil gehalten, indem mittels eines verschiebbaren Betätigungselementes Blockierelemente gehalten bzw. gelöst werden, die in die ringförmige Nut des Gegenanschlussteils eingreifen. Dieses Betätigungselement ist an dem Zuführanschlussteil angebracht. Da - wie beschrieben - das Gegenanschlussstück sicher festgehalten werden muss, ist ein sicheres Lösen dieser Verbindung nur möglich, wenn beide Hände benutzt werden.

Der vorliegenden Erfindung liegt die Aufgabe zu Grunde. die Bedienung bei der Kontaktierung und beim Lösen von pneumatischen Anschlüssen bzw. anderen Anschlüssen gasförmiger Medien zu verbessern.

Diese Aufgabe wird gemäß Anspruch 1 gelöst, indem bei einem Steckanschluss, bestehend aus einem Zuführanschlussteil und einem kompatiblen Gegenanschlussteil, das Zuführanschlussteil und das Gegenanschlussteil zur Ausbildung des Steckanschlusses miteinander verbindbar sind. Bei den dargestellten pneumatischen Anschlüssen ist dabei das Zuführanschlussteil an der pneumatischen Versorgungsleitung angeschlossen. Das Gegenanschlussteil ist an der Zuführleitung zu einem pneumatischen Verbraucher angeschlossen. Wenn die Verbindung des Steckanschlusses hergestellt ist, können gasförmige Medien - insbesondere Druckluft pneumatischer Antriebe - durch den Steckanschluss gefördert werden.

Dabei weist der aus dem Zuführanschlussteil und dem Gegenanschlussteil bestehende Steckanschluss eine erste Position auf, bei der zum einen das gasförmige Medium durch den Steckanschluss förderbar ist und in der zum anderen das Zuführanschlussteil und das kompatible Gegenanschlussteil form- und/oder kraftschlüssig miteinander verbunden sind. Bei dem bekannten Steckanschluss sind in dieser Position die Blockierelemente durch die verschiebbare Hülse in die ringförmige Nut des Gegenanschlussteils gedrückt. Außerdem ist durch das eingesteckte Gegenanschlussteil das Rückschlagventil in dem Zuführanschlussteil geöffnet.

Der aus dem Zuführanschlussteil und dem Gegenanschlussteil bestehende Steckanschluss weist weiterhin eine zweite Position auf, bei der der Zuführanschluss des gasförmigen Mediums gesperrt ist und bei der das Gegenanschlussteil von dem Zuführanschlussteil gelöst ist. Dies ist der Fall, wenn die verschiebbare Hülse so verschoben ist, dass die Blockierelemente freigegeben sind. Das Gegenanschlussteil wird dann durch den pneumatischen Druck herausgedrückt, so dass dann das Rückschlagventil in dem Zuführanschlussteil geschlossen ist.

Nach einem Ausführungsbeispiel nach der vorliegenden Erfindung besteht das Zuführanschlussteil aus einem Schiebeventil. Dieses kann auf eine pneumatische Versorgungsleitung aufgeschraubt werden. Über dieses Schiebeventil kann in der entsprechenden ersten Position durch eine entsprechende Stellung des Schiebeelementes ein eingestecktes Gegenanschlussteil mit der pneumatischen Versorgungsleitung kontaktiert sein. Ebenso können in dieser ersten Position wiederum Blockademittel vorhanden sein, durch die das Gegenanschlussteil mechanisch in dem Zuführanschlussteil gehalten wird. Dieses Schiebeventil kann wiederum eine zweite Position aufweisen, in der die pneumatische Versorgungsleitung gesperrt ist und in der außerdem die Blockademittel freigegeben sind.

Nach der vorliegenden Erfindung ist gemäß Anspruch 1 weiterhin eine Zwischenposition zwischen der ersten Position und der zweiten Position vorhanden, in der der Zuführanschluss des gasförmigen Mediums gesperrt ist und in der das Gegenanschlussteil gegenüber der umgebenden Atmosphäre geöffnet ist. Weiterhin sind das Zuführanschlussteil und das Gegenanschlussteil in dieser Zwischenposition form- und/oder kraftschlüssig miteinander verbunden.

Indem der Zuführanschluss (d.h. die pneumatische Versorgungsleitung) gesperrt ist und gleichzeitig das Gegenanschlussteil gegenüber der umgebenden Atmosphäre geöffnet ist und damit entlüftet, wird vorteilhaft vermieden, dass beim Lösen des Gegenanschlussteils der beschriebene Peitschenknall auftritt. Ein Abdrücken des Gegenanschlussteils kann in dieser Zwischenposition nicht erfolgen, weil das Gegenanschlussteil noch mechanisch in dem Zuführanschlussteil gehalten wird (form- und/oder kraftschlüssig). In dieser Zwischenposition kann über das Gegenanschlussteil die zugehörige Leitung entlüftet werden, so dass bei einem nachfolgenden mechanischen Lösen des Gegenanschlussteils kein pneumatischer Druck mehr an dem Gegenanschlussteil ansteht.

Im praktischen Betrieb ergibt sich noch ein weiterer Vorteil durch diese definierte Zwischenposition. Bei einem längeren Nichtgebrauch des pneumatischen Verbrauchers kann die pneumatischer Versorgungsleitung gesperrt und die Versorgungsleitung zwischen dem Gegenanschlussteil und dem pneumatischen Verbraucher entlüftet werden, wobei gleichzeitig das Gegenanschlussteil mechanisch fest gehalten in dem Zuführanschlussteil verbleiben kann. Dies gilt zumindest so lange kein anderer pneumatischer Verbraucher an das Zuführanschlussteil angeschlossen werden soll.

Dies erweist sich insofern als vorteilhaft, weil das Gegenanschlussteil dann nicht frei herumhängt und wieder verwahrt werden muss. Da das Gegenanschlussteil formschlüssig mit dem Zuführanschlussteil zusammenwirken muss, müssen Beschädigungen an der Oberfläche des Gegenanschlussteils vermieden werden. Dies erweist sich aber als problematisch, wenn das Gegenanschlussteil frei wird nach dem Trennen des pneumatischen Verbrauchers von der pneumatischen Versorgungsleitung (wie dies bei der verbreiteten Lösung nach dem Stand der Technik der Fall ist). Demgegenüber erweist es sich als vorteilhaft, wenn das Gegenanschlussteil in dem Zuführanschlussteil verbleibt, auch wenn der Verbraucher pneumatisch getrennt ist.

Diese Möglichkeit der Entlüftung pneumatischer Verbraucher, wenn diese für eine bestimmte Zeit nicht in Betrieb genommen werden, erweist sich auch insofern als vorteilhaft, weil eine eventuelle negative Beeinflussung von pneumatischen Steuerungen und Stellantrieben durch angeschlossene, aber nicht benötigte Verbraucher vermieden werden kann. Dabei verbleibt wie ausgeführt das Gegenanschlussteil in dem Zuführanschlussteil.

Anspruch 2 betrifft im Unterschied zu Anspruch 1 die Darstellung lediglich des Zuführanschlussteils und nicht des vollständigen Steckanschlusses. Dabei weist das Zuführanschlussteil Verbindungsmittel auf zur Verbindung des Zuführanschlussteils mit einer Zuführvorrichtung für gasförmige Medien. Diese Verbindungsmittel können beispielsweise ein Gewinde sein, durch das das Zuführanschlussteil dichtend auf ein Ende einer Pneumatikleitung aufgeschraubt werden kann. Die Verbindungsmittel können auch durch ein entsprechendes Teil des Zuführanschlussteils realisiert sein, das beispielsweise für eine Verbindung durch einen Schweißvorgang vorgesehen ist.

Die Zuführvorrichtung kann beispielsweise bei einer pneumatischen Energieversorgung aus der eingangs beschriebenen Stammleitung mit den Stichleitungen bestehen. Ebenso kann die Zuführvorrichtung aus einem Druckluftspeicher bestehen oder einem Kompressor, an die das Zuführanschlussteil dann angeschlossen wird.

Das Zuführanschlussteil weist Aufnahmemittel auf zur Aufnahme eines Gegenanschlussteils. Diese Aufnahmemittel können in einer buchsenförmigen Aufnahme bestehen, in die eine Steckvorrichtung zum Anschluss pneumatischer Verbraucher eingesteckt werden kann.

Dem Zuführanschlussteil ist wenigstens ein Betätigungselement zugeordnet. In einer ersten Position des wenigstens einen Betätigungselementes verhindern Blockademittel der Aufnahmemittel des Zuführanschlussteils ein mechanisches Lösen eines in die Aufnahmemittel eingesetzten Gegenanschlussteils. Weiterhin sind in dieser ersten Position Durchlassmittel geöffnet zur Abgabe des gasförmigen Mediums über das Zuführanschlussteil in ein eingesetztes Gegenanschlussteil.

In einer zweiten Position des wenigstens einen Betätigungselementes ist das Zuführanschlussteil gegen eine Abgabe des gasförmigen Mediums gesperrt. Außerdem sind in dieser zweiten Position des wenigstens einen Betätigungsmittels die Blockademittel der Aufnahmemittel gelöst. Dadurch kann das Gegenanschlussteil entnommen werden. Gleichzeitig ist in dem beschriebenen Beispiel der Verwendung der Erfindung im Zusammenhang mit einem Anschluss eines pneumatischen Verbrauchers an eine pneumatische Versorgungsleitung in dieser zweiten Position die pneumatische Versorgungsleitung bei nicht angeschlossenem pneumatischem Verbraucher gesperrt.

Nach der vorliegenden Erfindung weist das wenigstens eine Betätigungsmittel eine Zwischenposition auf, in der das Zuführanschlussteil gegen eine Abgabe des gasförmigen Mediums gesperrt ist. Weiterhin verhindern in dieser Zwischenposition die Blockademittel der Aufnahmemittel des Zuführanschlussteils ein mechanisches Lösen eines in die Aufnahmemittel eingesetzten Gegenanschlussteils. Außerdem ist in dieser Zwischenposition ein in die Aufnahmemittel eingesetztes Gegenanschlussteil mit der umgebenden Atmosphäre verbunden.

Indem der Zuführanschluss (d.h. die pneumatische Versorgungsleitung) über das Zuführanschlussteil gesperrt ist und gleichzeitig ein in die Aufnahmemittel des Zuführanschlussteils eingesetztes Gegenanschlussteil gegenüber der umgebenden Atmosphäre geöffnet ist und damit entlüftet, wird vorteilhaft vermieden, dass beim Lösen des Gegenanschlussteils der beschriebene Peitschenknall auftritt. Ein Abdrücken des Gegenanschlussteils kann in dieser Zwischenposition nicht erfolgen, weil das Gegenanschlussteil noch mechanisch in dem Zuführanschlussteil gehalten wird (form-und/oder kraftschlüssig). In dieser Zwischenposition kann über das Gegenanschlussteil die zugehörige Leitung entlüftet werden, so dass bei einem nachfolgenden mechanischen Lösen des Gegenanschlussteils kein pneumatischer Druck mehr an dem Gegenanschlussteil ansteht.

Im praktischen Betrieb ergibt sich noch ein weiterer Vorteil durch diese definierte Zwischenposition. Bei einem längeren Nichtgebrauch des pneumatischen Verbrauchers kann die pneumatischer Versorgungsleitung gesperrt und die Versorgungsleitung zwischen dem Gegenanschlussteil und dem pneumatischen Verbraucher entlüftet werden, wobei gleichzeitig das Gegenanschlussteil mechanisch fest gehalten in dem Zuführanschlussteil verbleiben kann. Dies gilt zumindest so lange kein anderer pneumatischer Verbraucher an das Zuführanschlussteil angeschlossen werden soll.

Dies erweist sich insofern als vorteilhaft, weil das Gegenanschlussteil dann nicht frei herumhängt und wieder verwahrt werden muss. Da das Gegenanschlussteil formschlüssig mit dem Zuführanschlussteil zusammenwirken muss, müssen Beschädigungen an der Oberfläche des Gegenanschlussteils vermieden werden. Dies erweist sich aber als problematisch, wenn das Gegenanschlussteil frei wird nach dem Trennen des pneumatischen Verbrauchers von der pneumatischen Versorgungsleitung (wie dies bei der verbreiteten Lösung nach dem Stand der Technik der Fall ist). Demgegenüber erweist es sich als vorteilhaft, wenn das Gegenanschlussteil in dem Zuführanschlussteil verbleibt, auch wenn der Verbraucher pneumatisch getrennt ist.

Durch den Anspruch 2 wird damit ein Zuführanschlussteil beschrieben und beansprucht, das in Kombination mit den derzeit auf dem Markt befindlichen Gegenanschlussteilen zur Verwendung vorgesehen ist. Dies erweist sich als vorteilhaft, weil bei Betrieben mit vergleichsweise vielen pneumatischen Verbrauchern und damit mit einer entsprechenden Vielzahl bereits vorhandener Gegenanschlussteile keine Umrüstung dieser vorhandenen Elemente erfolgen muss. Vielmehr ist das Zuführanschlussteil so ausgelegt, dass dieses die bereits vorhandenen Gegenanschlussteile über die Blockademittel der Aufnahmemittel mechanisch halten kann und gleichzeitig in den entsprechenden Positionen des wenigstens einen Betätigungselementes die beschriebenen pneumatischen Verbindungen herstellt.

Die beschriebene Möglichkeit der Entlüftung pneumatischer Verbraucher, wenn diese für eine bestimmte Zeit nicht in Betrieb genommen werden, erweist sich auch insofern als vorteilhaft, weil eine eventuelle negative Beeinflussung von pneumatischen Steuerungen und Stellantrieben durch angeschlossene, aber nicht benötigte Verbraucher vermieden werden kann. Dabei verbleibt wie ausgeführt das Gegenanschlussteil in dem Zuführanschlussteil.

Bei der Ausgestaltung nach Anspruch 3 ist der Steckanschluss bzw. das Zuführanschlussteil so ausgestaltet, dass die Überführung von der ersten Position in die zweite Position durch wenigstens ein Betätigungselement erfolgt, wobei das wenigstens eine Betätigungselement bei dieser Überführung von der ersten Position in die zweite Position einer Zwangsführung unterliegt derart, dass eine Überführung des Steckanschlusses von der ersten Position in die zweite Position nur über die Zwischenposition möglich ist.

Bei dieser Ausgestaltung sind die Positionen durch entsprechende Stellungen des wenigstens einen Betätigungselementes einstellbar, wobei die Positionen des Zuführanschlussteils sowie des Gegenanschlussteils - absolut oder relativ zueinander - unverändert bleiben. Es wird dann lediglich das wenigstens eine Betätigungselement bewegt.

Es wird mit der Ausgestaltung nach Anspruch 3 vorteilhaft erreicht, dass ein Benutzer beim Übergang von der ersten Position in die zweite Position diese Zwischenposition nicht umgehen kann. Soll bei einem angeschlossenen pneumatischen Verbraucher dieser Verbraucher von der pneumatischen Versorgungsleitung gelöst werden, ist es durch die Zwangsführung zwingend notwendig, vor dem Erreichen der zweiten Position (und damit dem mechanisch gelösten Zustand des Gegenanschlussteils) zunächst in die Zwischenposition zu gehen. In dieser Zwischenposition ist die pneumatische Versorgungsleitung bereits gesperrt und die Leitung zum pneumatischen Verbraucher wird entlüftet. Dabei wird aber gleichzeitig noch das Gegenanschlussteil mechanisch festgehalten. Das bedeutet, dass in dem Moment, in dem das Gegenanschlussteil mechanisch nicht mehr festgehalten wird, das Gegenanschlussteil bereits nicht mehr mit Druck beaufschlagt wird. Der beschriebene Peitschenknall lässt sich damit verhindern.

Bei der Ausgestaltung nach Anspruch 4 ist der Steckanschluss bzw. das Zuführanschlussteil derart ausgestaltet, dass die Überführung von der ersten Position in die Zwischenposition durch eine erste Betätigung erfolgt und dass die Überführung von der Zwischenposition in die zweite Position durch eine zweite Betätigung erfolgt, wobei die erste und die zweite Betätigung voneinander getrennt sind.

Dadurch wird vorteilhaft erreicht, dass für den Benutzer durch die getrennt auszuführenden Betätigungen deutlich wahrnehmbar wird, in welcher der beschriebenen Position sich das wenigstens eine Betätigungsmittel des Steckanschlusses bzw. des Zuführanschlussteils befindet.

Die getrennt auszuführenden Betätigungen können beispielsweise so realisiert sein, dass bei gleicher Betätigungsrichtung bei der Betätigung von der ersten Position in die Zwischenposition ein geringerer Kraftaufwand erforderlich ist als bei der Betätigung von der Zwischenposition in die zweite Position. Die Betätigungsrichtung kann dabei beispielsweise durch ein verschiebbares Betätigungselement definiert sein, das in Längsrichtung der pneumatischen Leitung verschiebbar ist. Der erhöhte Kraftaufwand beim Übergang von der Zwischenposition in die zweite Position kann beispielsweise realisiert sein, indem für diese Bewegung eine Betätigung zusätzlich gegen die Kraft einer Feder erforderlich ist, wobei die Federkraft nur bei der Betätigung von der Zwischenposition in die zweite Position wirkt.

Eine alternative oder zusätzliche Realisierung zu dieser Trennung der Betätigungen mit unterschiedlichem Kraftaufwand ergibt sich gemäß Anspruch 5, wonach der Steckanschluss bzw. das Zuführanschlussteil so ausgestaltet ist, dass die Orientierung der Betätigungsrichtung der ersten Betätigung unterschiedlich ist zur Orientierung der Betätigungsrichtung der zweiten Betätigung.

Durch diese unterschiedlichen Orientierungen der Betätigungsrichtungen ist für den Benutzer wiederum gut wahrnehmbar, in welcher Position sich der Steckanschluss bzw. das Zuführanschlussteil befindet.

Gegebenenfalls können die entsprechenden Positionen noch durch optische Markierungen gekennzeichnet werden, die entsprechend in Deckung sind, wenn die entsprechende Position eingestellt ist. Ebenso kann auch eine haptische Markierung vorgesehen sein, indem beispielsweise bei einer Drehbetätigung elliptisch ausgestaltete Elemente nur in einer einstellbaren Stellung in Deckung sind und in anderen einstellbaren Positionen gegeneinander verdreht sind.

Die unterschiedlichen Orientierungen können beispielsweise realisiert sein durch eine erste Linearbewegung entlang einer ersten Achse und eine zweite Linearbewegung entlang einer zweiten Achse, wobei die erste Achse und die zweite Achse beispielsweise im rechten Winkel zueinander orientiert sind.

Bei der Ausgestaltung nach Anspruch 6 ist der Steckanschluss bzw. das Zuführanschlussteil so ausgestaltet, dass eine der Betätigungen einer Schiebebewegung in einer Richtung entspricht und die andere Betätigung einer Drehbetätigung.

Durch diese Trennung und Unterscheidung der Betätigungsrichtungen ist für den Benutzer gut wahrnehmbar, welche der Betätigungen gerade erfolgt und in welcher Position sich der Steckanschluss bzw. das Zuführanschlussteil befindet.

In Weiterbildung dieser Lösung nach Anspruch 6 erfolgt gemäß Anspruch 7 die Drehung um eine Achse, die der Richtung der Schiebebewegung entspricht.

Dadurch lässt sich in einfacher Weise die Bewegung nacheinander ausführen.

Bei der Ausgestaltung nach Anspruch 8 entspricht dabei die erste Betätigung der Schiebebewegung und die zweite Betätigung der Drehbetätigung.

Dies erweist sich insofern als vorteilhaft, als die Änderungen der pneumatischen Anschlüsse bei der ersten Betätigung erfolgt. Da diese Betätigung als Schiebebewegung ausgestaltet ist, die in Längsrichtung der Leitung orientiert sein kann, können dabei 0-ringförmige Dichtungen entlang gleiten. Dadurch lässt sich in den einzelnen Positionen eine hinreichende Abdichtung der Anschlüsse auch bei hohen Drucken erreichen. Dennoch ist der Übergang der Positionen durch ein Gleiten dieser O-ringförmigen Dichtungen einfach möglich.

Durch die Ausgestaltung der zweiten Betätigung als Drehbetätigung ist für den Benutzer haptisch gut wahrnehmbar, dass mit dieser Drehbewegung (vergleichbar einer Schraubbewegung) ein mechanisches Lösen des Gegenanschlussteils realisiert wird.

Bei der Ausgestaltung nach Anspruch 9 erfolgt eine Betätigung des wenigstens einen Betätigungselementes aus der ersten Position in die Zwischenposition in einer bestimmten Betätigungsrichtung. Weiterhin erfolgt dabei bei einer Betätigung des wenigstens einen Betätigungselementes aus der Zwischenposition in der Gegenrichtung zu der bestimmten Betätigungsrichtung eine Überführung des wenigstens einen Betätigungselementes aus der Zwischenposition in die erste Position.

Dadurch ist für den Benutzer wiederum gut und eindeutig definiert und erkennbar, in welcher Position sich der Steckanschluss bzw. das Zuführanschlussteil befindet.

Bei der Ausgestaltung nach Anspruch 10 erfolgt eine Betätigung des wenigstens einen Betätigungselementes aus der Zwischenposition in die zweite Position in einer definierten Betätigungsrichtung. Weiterhin erfolgt dabei bei einer Betätigung des wenigstens einen Betätigungselementes aus der zweiten Position in der Gegenrichtung zu der definierten Betätigungsrichtung eine Überführung des wenigstens einen Betätigungselementes aus der zweiten Position in die Zwischenposition.

Dadurch ist für den Benutzer wiederum gut und eindeutig definiert und erkennbar, in welcher Position sich der Steckanschluss bzw. das Zuführanschlussteil befindet.

Ein Ausführungsbeispiel der Erfindung ist in der Zeichnung dargestellt. Es zeigt dabei im Einzelnen:
Fig. 1: ein Zuführanschlussteil nach der vorliegenden Erfindung,
Fig. 2: ein Ausführungsbeispiel für eine Zwangsführung von der ersten Position zur zweiten Position über die Zwischenposition,
Fig. 3: ein Ausführungsbeispiel für die mechanische Fixierung des Gegenanschlussteils sowie
Fig. 4 bis Fig. 14: weitere Ausführungsbeispiele für die mechanische Fixierung des Gegenanschlussteils.

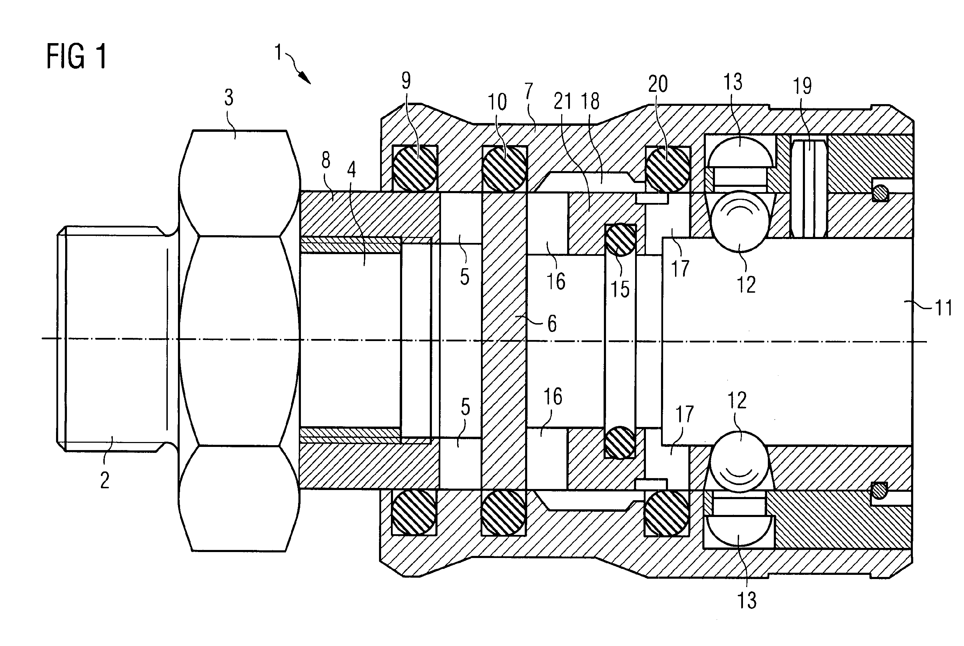

Figur 1 zeigt ein Zuführanschlussteil 1 nach der vorliegenden Erfindung. Dieses Zuführanschlussteil 1 kann als Abschlussstück auf ein Ende einer pneumatischen Versorgungsleitung dichtend aufgeschraubt werden. Dies erfolgt in dem in Figur 1 gezeigten Ausführungsbeispiel mit einem Innengewinde in dem Anschluss 2. Zum Aufschrauben des Zuführanschlussteils 1 kann der Sechskant 3 verwendet werden, an dem ein Gabelschlüssel passender Weite angreifen kann.

Das Zuführanschlussteil 1 weist im Weiteren ein Innenteil auf, das einen ersten Innenraum 4 aufweist. Dieser erste Innenraum 4 ist durch eine Abschlusswand 6 abgeschlossen. Weiterhin weist dieser erste Innenraum 4 noch Durchgangskanäle 5 durch die äußere Wand des ersten Innenraums 4 auf.

Weiterhin ist zu sehen, dass das Zuführanschlussteil 1 noch eine in axialer Richtung verschiebbare Hülse 7 aufweist. Diese Hülse 7 stellt in dem dargestellten Ausführungsbeispiel das wenigstens eine Betätigungsmittel im Sinne dieser Erfindung dar.

Die zuführende Pneumatikleitung ist in der dargestellten Position der Hülse 7 dichtend abgeschlossen. Die Durchgangskanäle 5 des ersten Innenraums 4 sind über die Hülse 7 sowie die beiden O-Ringdichtungen 9 und 10 dichtend abgeschlossen. Da weiterhin die Abschlusswand 6 vorhanden ist, kann daher in der dargestellten Position der Hülse 7 keine Druckluft aus der pneumatischen Versorgungsleitung austreten. Die O-Ringdichtung 9 wirkt in dieser Position der Hülse 7 mit dem Wandteil 8 des Innenteils des Zuführanschlussteils 1 zusammen. Die O-Ringdichtung 10 wirkt mit der Abschlusswand 6 zusammen. Damit sind die Durchgangkanäle 5 vollständig abgedichtet.

Weiterhin ist zu sehen, dass auf der dem Anschluss 2 entgegen gesetzten Seite des Zuführanschlussteils 1 eine Aufnahmeöffnung 11 vorhanden ist, in die ein Gegenanschlussteil eingesetzt werden kann. Dieses Gegenanschlussteil kann beispielsweise ein Stecker eines pneumatischen Verbrauchers sein. Dieses Gegenanschlussteil ist in der Darstellung der Figur 1 nicht gezeigt.

Ein eingesetztes Gegenanschlussteil wird in dem Zuführanschlussteil 1 gehalten, indem die Kugeln 12 in eine entsprechende Ringnut an dem äußeren Umfang des Gegenanschlussteils eingreifen. Es ist zu sehen, dass in der in Figur 1 gezeigten Darstellung die Kugeln 12 jeweils durch einen elastischen Ausrücker 13 in ihrer Position gehalten werden. Insbesondere wird durch den elastischen Ausrücker 13 in der dargestellten Position erreicht, dass die Kugeln 12 radial nach innen gedrückt werden. Bei einem eingesetzten Gegenanschlussteil greifen die Kugeln 12 dann in dieser Position in die Ringnut im Gegenanschlussteil ein.

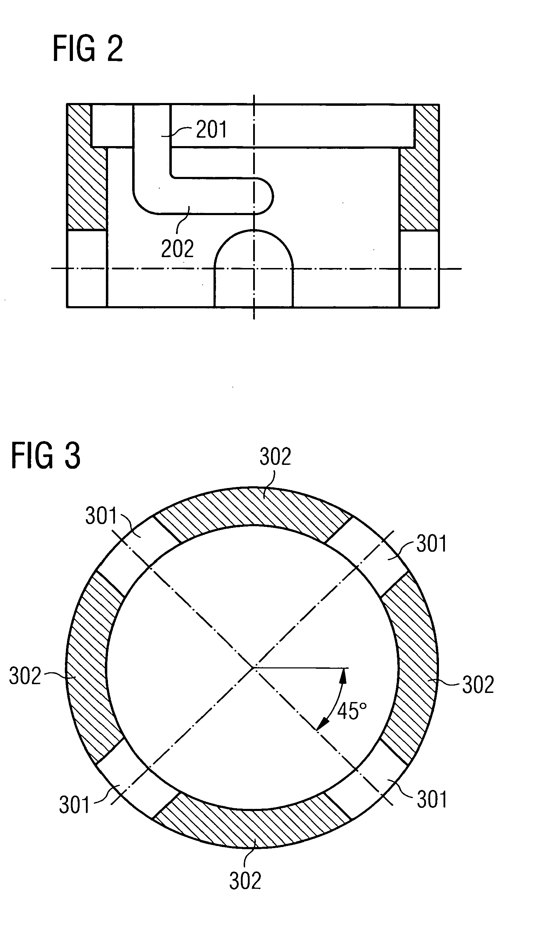

Die elastischen Ausrücker 13 befinden sind jeweils an den Positionen auf dem Umfang des Kreises, an denen in der Darstellung der Figur 3 die Abstände 301 zwischen den Abstützteilen 302 sind.

Die Kugeln 12 lassen sich gegen die elastischen Ausrücker 13 nach außen drücken, so dass dadurch das Gegenanschlussteil entnommen werden kann. Beim Einsetzen des Gegenanschlussteils werden die Kugeln 12 durch die elastischen Ausrücker 13 radial nach innen in die Ringnut des Gegenanschlussteils gedrückt.

An den Positionen, an denen in Figur 3 die Abstützteile 302 sind (d.h. zwischen den elastischen Ausrückern 13), bilden nicht kompressible Teile (nämlich die Abstützteile 302) die radiale Fortsetzung und damit die Abstützung der Kugeln 12 in radialer Richtung. Die Kugeln 12 werden bei einer entsprechenden Drehung aus einer Position, bei der die elastischen Ausrücker 13 die radiale Fortsetzung der Kugeln 12 bilden, zu einer Position, bei der Abstützteile 302 die radiale Fortsetzung der Kugeln 12 bilden, an einem radialen Ausweichen nach außen gehindert.

Es ist zu sehen, dass die elastischen Ausrücker 13 durch eine Hinterschneidung an einem Herausfallen gehindert sind.

In der in Figur 1 dargestellten Position lassen sich die Kugeln 12 durch die Elastizität der Ausrücker 13 bei einer entsprechenden Kraft in radialer Richtung nach außen drücken. Die Elastizität kann gegeben sein, indem die elastischen Ausrücker 13 aus einem Polymer bestehen, das eine entsprechende Zahl von Lufteinschlüssen aufweist, so dass die elastischen Ausrücker kompressibel sind. Diese Kompressibilität ist dabei reversibel, so dass die elastischen Ausrücker wieder in ihre ursprüngliche Form zurückgehen, wenn die äußere Kraft auf die elastischen Ausrücker entsprechend schwächer wird.

Weiterhin ist in dem Innenteil des Zuführanschlussteils 1 noch eine O-Ringdichtung 15 zu sehen, die am äußeren Umfang eines eingesetzten Gegenanschlussteils anliegt.

Es ist zu sehen, dass das Innenteil des Zuführanschlussteils 1 im Bereich für den Anschluss des Gegenanschlussteils zwei Kanäle 16 und 17 aufweist, die die Seitenwand dieses Innenteils durchdringen.

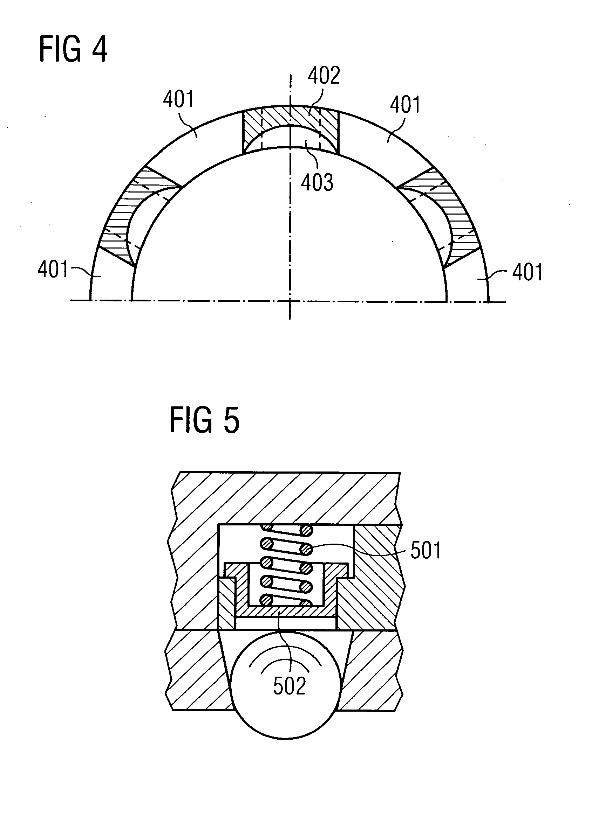

Außerdem ist zu sehen, dass die Hülse 7 noch einen inneren Ringkanal 18 aufweist. Damit wird ein eingesetztes Gegenanschlussstück in der in Figur 1 gezeigten Position bezüglich einer Verschiebung entlang der Längsachse der Hülse 7 entlüftet, indem die Luft aus dem vorderen Ende des Gegenanschlusstücks austritt über den Kanal 16, den inneren Ringkanal 18 der Hülse 7, den Kanal 17 und von dort zwischen der äußeren Seitenwand des Gegenanschlussteils und der inneren Seitenwand des Innenteils des Zuführanschlussteils 1. Die Luft kann dabei zwischen den Kugeln 12 hindurchströmen. Dazu wird weiterhin auf Figur 4 verwiesen. Dort sind weitere Kanäle 403 beschrieben, durch die die Luft aus dem Zuführanschlussteil 1 abgeführt wird.

In der in Figur 1 gezeigten Position der Hülse 7 ist das Gegenanschlussstück bereits entlüftet. Figur 1 zeigt das Zuführanschlussteil 1 bzw. die Hülse 7 in einer Position, die der zweiten Position im Sinne der vorliegenden Beschreibung entspricht.

Die Hülse 7 weist eine weitere O-Ringdichtung 20 auf, die in der in Figur 1 gezeigten Position keine weitere Wirkung hat.

In der in Figur 1 gezeigten Darstellung ist die zuführende Versorgungsleitung der Pneumatikleitung am Anschluss 2 gesperrt. Ein eingesetztes Gegenanschlussteil ist in der dargestellten Position bereits entlüftet. Die Kugeln 12 sind in radialer Richtung nach außen beweglich gegen die elastischen Ausrücker 13. Dadurch ist das Gegenanschlussteil nicht mehr mechanisch fest gehalten und aus dem Zuführanschlussteil entnehmbar.

Damit entspricht die in Figur 1 dargestellte Position der zweiten Position im Sinne der vorliegenden Gesamtdarstellung.

Es ist weiter ein Führungsstift 19 zu sehen, der an der Innenwand der Hülse 7 angebracht ist und in einer Nut in dem Innenteil des Zuführanschlussteils 1 geführt wird. Diese Nut und die Zwangsführung des Führungsstiftes 19 und damit auch der Bewegung der Hülse 7 werden in Figur 2 noch näher erläutert.

Nach einer Drehung der Hülse 7 um deren Längsachse werden die Kugeln in radialer Richtung fest gehalten und nach innen gedrückt in eine entsprechende Ringnut eines Gegenanschlussteils, das in das Zuführanschlussteil 1 eingesetzt ist. In radialer Richtung befinden sich dann oberhalb der Kugeln 12 die Abstützteile 302, so dass die Kugeln 12 daran gehindert sind, in radialer Richtung nach außen auszuweichen. Dadurch wird das Gegenanschlussteil mechanisch fest in dem Zuführanschlussteil 1 gehalten, ist aber noch nicht pneumatisch angeschlossen und verbunden mit der Leitung, die an dem Anschluss 2 des Zuführanschlussteils 1 angeschlossen ist. Diese Position entspricht dann der Zwischenposition. Es ist ersichtlich, dass der zuvor beschriebene Weg, über den ein Druck im Gegenanschlussteil entweichen kann, auch bei einer Drehung der Hülse 7 noch offen ist. Das Gegenanschlussteil bleibt also mit der umgebenden Atmosphäre verbunden.

Im weiteren kann durch die Zwangsführung der in Figur 2 dargestellten Nut die Hülse 7 als Betätigungselement in axialer Richtung des Zuführanschlussteils 1 verschoben werden in Richtung des Anschlusses 2. Es ist ersichtlich, dass bei einem derartigen Verschieben der Hülse 7 ein eingesetztes Gegenanschlussteil mit der pneumatischen Versorgungsleitung verbunden wird. Dabei bleibt das Gegenanschlussteil mechanisch gehalten.

Die O-Ringdichtung 10 wirkt dann mit dem Wandteil 8 des Innenteils des Zuführanschlussteils 1 zusammen. Die O-Ringdichtung 20 wirkt mit dem Wandteil 21 des Innenteils des Zuführanschlussteils 1 zusammen.

Der innere Ringkanal 18 der Hülse 7 überbrückt dann die Abschlusswand 6 und verbindet die Durchgangskanäle 5 mit den Kanälen 16. Von dort tritt die Luft der Pneumatikanlage in das Innere des Gegenanschlussteils ein. Dieses Gegenanschlussteil ist an seiner Außenfläche nochmals mit der O-Ringdichtung 15 abgedichtet.

In dieser beschriebenen Position der Hülse 7 (die in der Figur 1 nicht gezeigt wird), wird daher ein Austreten von Luft der Pneumatikanlage aus dem Zuführanschlussteil 1 verhindert.

Eine solche Position entspricht der ersten Position im Sinne dieser Patentanmeldung.

Das Zuführanschlussteil nach Figur 1 stellt ein Schiebeventil dar. Dies erweist sich insofern als besonders vorteilhaft, weil die Verschiebung der Hülse insbesondere auch in Längsrichtung des Zuführanschlussteils nicht gegen einen anstehenden Druck einer Pneumatikleitung erfolgen muss. Es sind dabei lediglich Reibungskräfte des Zuführanschlussteils selbst zu überwinden. Im Unterschied zu anderen Lösungen aus dem Stand der Technik ist es nicht notwendig, einzelne Teile (beispielsweise bei einem Rückschlagventil) gegen einen anstehenden Druck einer Pneumatikleitung zu bewegen. Es wird lediglich ein bestimmtes Volumen (nämlich das des inneren Ringkanals 18 des Zuführanschlussteils 1) insgesamt verschoben. Sobald dieses Volumen mit dem Atmosphärendruck verbunden ist, entspannt sich der in dem inneren Ringkanal 18 bis dahin vorherrschende Druck. Das Verschieben dieses Volumens erfolgt weitgehend kraftfrei.

Insbesondere wird es durch eine solche Lösung auch möglich, bei größeren Querschnitten von Pneumatikleitungen pneumatische Verbraucher anzuschließen oder zu trennen, indem eine sichere "Einhandbedienung" möglich wird. Insbesondere kann auch dann keine unkontrollierte Bewegung des Gegenanschlussteils auftreten durch den beschriebenen Peitschenknalleffekt. Ebenso kann die zusätzlich Anbringung von Absperr- und Entlüftungsventilen mit den vergleichsweise umständlichen Abfolgen der Bedienungsschritte unterbleiben, weil auch bei den größeren Leitungsquerschnitten und höheren Drucken in der Pneumatikleitung das Anschließen und Trennen der pneumatischen Verbraucher weitgehend kraftfrei erfolgen kann.

Figur 2 zeigt ein Ausführungsbeispiel für die Zwangsführung von der ersten Position in die zweite Position über die Zwischenposition. Figur 2 zeigt einen Ausschnitt der äußeren Fläche des Innenteils des Zuführanschlussteils 1. In diesem Ausschnitt ist zu sehen, dass in die äußere Fläche eine Nut 201, 202 eingebracht ist. Mit dieser Nut wirkt der Stift 19 entsprechend der Darstellung der Figur 1 zusammen, der aus der inneren Oberfläche der Hülse 7 herausragt. Auf dem Teilstück 201 der Nut wird die Hülse 7 über den Stift 19 so geführt, dass sich die Hülse 7 nur in axialer Richtung längs des Zuführanschlussteils 1 bewegen lässt. Erreicht der Stift 19 das Ende des Teilstücks 201 der Nut im Übergang zu dem Teilstück 202, lässt sich die Hülse 7 nicht mehr weiter in Längsrichtung zum Zuführanschlussteil 1 bewegen. Durch die Führung des Stiftes 19 lässt sich die Hülse 7 dann entweder zurück in Längsrichtung des Zuführanschlussteils 1 bewegen oder durch eine andere Orientierung der Betätigung im Sinne einer Drehbewegung. Der Stift 19 der Hülse 7 wird dann entlang dem Teilstück 202 der Nut geführt.

Der Übergang von dem Teilstück 201 zu dem Teilstück 202 definiert dabei die Zwischenposition im Sinne der vorliegenden Beschreibung.

Figur 3 zeigt die Anordnung der Abstützteile 302. Im Verhältnis zur Figur 1 handelt es sich dabei um einen Schnitt senkrecht zur Zeichnungsebene in der Darstellung der Figur 1 durch die (in Figur 3 nicht dargestellten) Kugeln 12. Es ist zu sehen, dass auf dem Umfang vier dieser Abstützteile 302 angebracht sind, die jeweils etwa einen Abstand voneinander aufweisen, der in etwa dem Durchmesser der Kugeln 12 entspricht. Bei der Darstellung nach Figur 3 mit vier Abstützteilen 302 sind entsprechend auch vier Kugeln 12 vorhanden. Ist die Hülse 7 mit dem ringförmigen Element der Darstellung der Figur 3 so gedreht, dass die Kugeln 12 in radialer Richtung von jeweils einem Abstützteil 302 fortgesetzt werden, können die Kugeln 12 nicht in radialer Richtung nach außen gedrückt werden. Ein in das Zuführanschlussteil 1 eingesetztes Gegenanschlussteil ist dann mechanisch fest gehalten.

Wird hingegen die Hülse 7 und damit auch die Anordnung der Abstützteile 302 um 45 Grad gedreht, so können die Kugeln 12 nach außen gedrückt werden.

In den Löcher 301 zwischen den Abstützteilen 302 können die elastischen Ausrücker 13 entsprechend der Darstellung der Figur 1 positioniert sein. In dieser um 45 Grad gedrehten Stellung können die Kugeln 12 also radial nach außen gedrückt werden, beispielsweise durch die Elastizität der Ausrücker 13. Andere Ausgestaltungen für Ausrückelemente, die an den Positionen 301 eingesetzt werden können, werden nachfolgend noch beschrieben.

Ein eingestecktes Gegenanschlussteil kann dann aus dem Zuführanschlussteil 1 entnommen werden.

Figur 4 zeigt eine Darstellung eines Teils des Zuführanschlussteils 1 in einem Schnitt senkrecht zur Zeichnungsebene der Figur 1 durch die (hier wiederum nicht dargestellten) Kugeln 12. Dargestellt ist hier das Innenteil des Zuführanschlussteils 1. Die Kugeln 12 befinden sich an den Positionen 401. Zwischen diesen Positionen sind Wandelemente 402 vorhanden. Es ist zu sehen, dass auf der Innenseite dieser Wandelemente 402 Nuten 403 eingefräst sind, die entlang der Wandelemente 402 und in axialer Richtung des Zuführanschlussteils 1 darüber hinaus verlaufen von dem Ende 11 des Zuführanschlussteils 1 bis zu dem Kanal 17. Dadurch kann ein Überdruck aus dem Gegenanschlussteil entweichen über die Kanäle 16, 18, 17 und 403.

Es ist zu sehen, dass in der Darstellung nach Figur 4 sechs Kugeln 12 vorgesehen sind, während in der Darstellung nach Figur 3 lediglich vier Kugeln vorgesehen sind. Dies ändert aber nichts an den Grundprinzipien, die im Zusammenhang mit den Figuren 3 und 4 erläutert werden sollen.

Figur 5 zeigt eine Ausgestaltung, bei der an den entsprechenden Positionen der elastischen Ausrücker 13 der Darstellung nach Figur 1 an den Positionen 301 der Darstellung nach Figur 3 mit einer Federkraft 501 belastete Ausrückelemente 502 angeordnet sind, die durch die Federkraft 501 radial nach innen gedrückt werden. Die Ausrückelemente 502 werden durch die Federkraft 501 maximal radial so weit nach innen gerückt, dass diese an den Anschlägen aufliegen. Die Kugeln 12 sind in dieser Position nach innen gedrückt, so dass diese in eine Ringnut eines Gegenanschlussteils eingreifen. Das Funktionsprinzip ist im Übrigen dasselbe wie bei den elastischen Ausrückern 13, die im Zusammenhang mit den Figuren 1 und 3 bereits erörtert wurden.

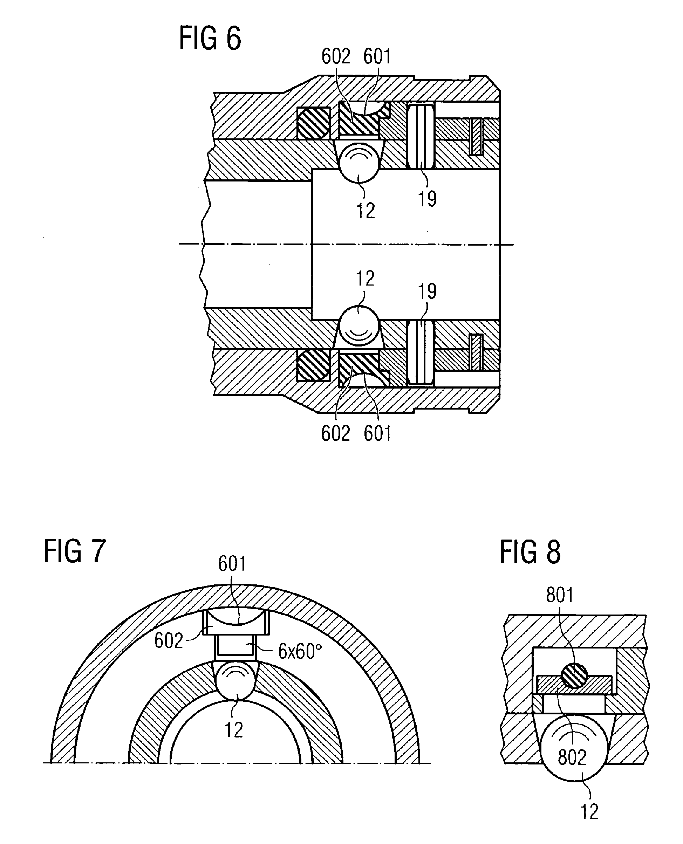

Eine weitere alternative Ausgestaltung ist in den Figuren 6 und 7 zu sehen. Figur 6 zeigt einen Teilausschnitt eines Zuführanschlussteils. Dieser entspricht dem rechten Teil des Zuführanschlussteils nach der Figur 1. Anstelle der elastischen Ausrücker 13 ist in der Figur 6 ein formelastisches Ausrückelement 602 zu sehen. In der Darstellung der Figur 6 weist dieses an der Oberseite eine kugelförmige Ausnehmung 601 auf. Das Material des formelastischen Ausrückelementes 602 ist biegbar. Wird durch die Kugel 12 eine Kraft auf das formelastische Ausrückelement 602 ausgeübt, verformt sich dieses derart, dass die kugelförmige Ausnehmung 601 verschwindet. Dadurch verformt sich die äußere Kontur des formelastischen Ausrückelementes 602, so dass die Kugeln 12 jeweils nach außen ausweichen können. Gleichzeitig weisen die formelastischen Ausrückelemente 602 die Eigenschaft auf, dass deren Verformung reversibel ist. Das bedeutet, dass bei einer geringeren Kraft auf die Kugeln 12 in radialer Richtung nach außen die Kugeln 12 wiederum durch die Rückstellkraft der formelastischen Ausrückelemente 602 nach innen gedrückt werden.

Bei der Ausgestaltung der Figur 6 ist zu sehen, dass das Zuführanschlussteil dort zwei Führungsstifte 19 aufweist.

Figur 7 zeigt die Darstellung nach Figur 6 in einem Schnitt senkrecht zur Zeichnungsebene der Figur 6 durch die Kugeln 12. Die formelastischen Ausrückelemente 602 sind wiederum an den Positionen 301 der Darstellung nach Figur 3 angeordnet. Zwischen den formelastischen Ausrückelementen 602 sind wiederum Abstützteile 302 entsprechend der Darstellung nach Figur 3 angeordnet. Abhängig von der Drehung der Hülse relativ zu dem Zuführanschlussteil im Übrigen können die Kugeln 12 dann radial nach außen gedrückt werden oder nicht.

Figur 8 zeigt eine weitere alternative Ausgestaltung, bei der anstelle der elastischen Ausrücker 13 ein Ausrückelement 802 vorhanden ist, das durch einen elastisch verformbaren O-Ring 801 nach unten gedrückt wird. Der O-Ring 801 bewirkt wiederum eine federelastische Kraft auf das Ausrückelement 802.

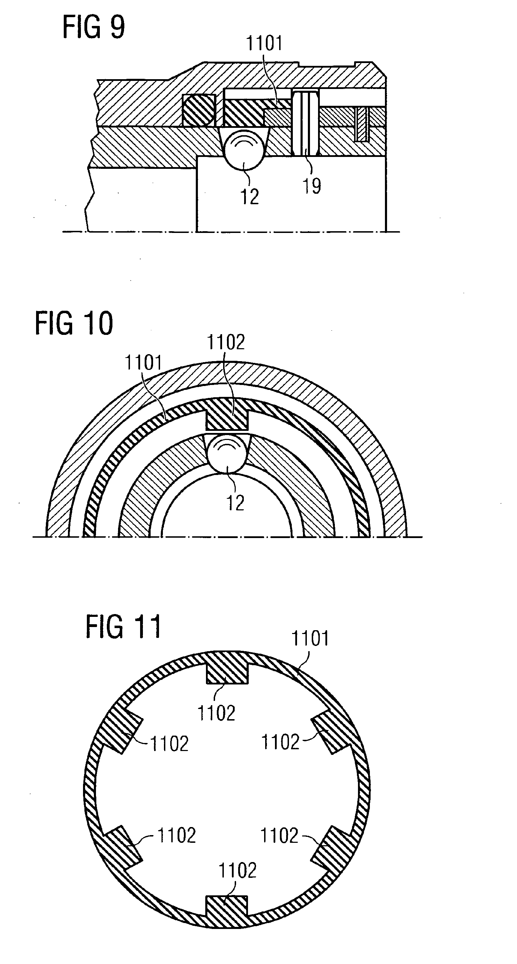

Anstelle der einzelnen elastischen Ausrücker 13, der Ausrückelemente 502, 602 bzw. 802 nach den Darstellungen der vorhergehenden Figuren kann entsprechend der Darstellung der Figuren 9 bis 11 auch ein Noppenring 1101 vorgesehen werden, der dann aus einem vergleichsweise starren Material besteht. Der Noppenring 1101 weist entsprechend radial nach innen weisende Noppen 1102 auf. Sofern die Verdrehung des Noppenrings 1101 derart ist, dass diese Noppen 1102 die radiale Fortsetzung der Kugeln 12 bilden, werden die Kugeln 12 dann daran gehindert, radial nach außen ausweichen zu können. Die Kugeln werden durch die Noppen in dieser Drehstellung in der radial weiter innen liegenden Position gehalten, in der diese in die Ringnut eines eingesetzten Gegenanschlussteils eingreifen und dieses mechanisch halten. Ist die Verdrehung des Noppenrings 1101 hingegen derart, dass ein Zwischenraum zwischen zwei Noppen 1102 die radiale Fortsetzung der Kugeln 12 bildet, können diese Kugeln 12 jeweils in den entsprechenden Zwischenraum radial nach außen ausweichen. Eine Gegenanschlussteil ist in dieser Drehstellung mechanisch gelöst.

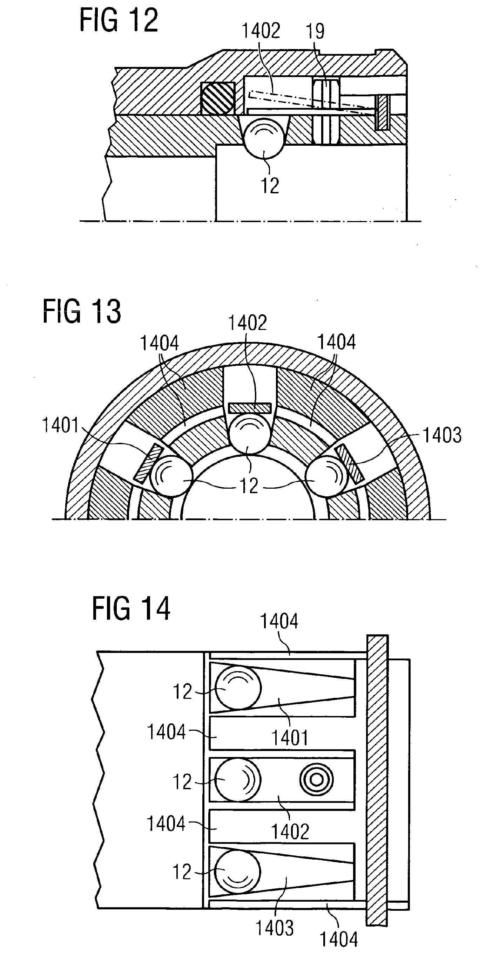

Die Figuren 12 bis 14 zeigen eine weitere alternative Ausgestaltung für eine federelastische Lagerung der Kugeln 12 in einer bestimmten Drehposition der Hülse 7. In dieser Ausgestaltung erfolgt die Lagerung der Kugeln 12 in dieser Drehposition durch Blattfedern 1401, 1402, 1403, die als Zungen ausgebildet sind, die an einer (kürzeren) Seitenkante befestigt sind.

In der Darstellung der Figur 14 ist zu sehen, dass die die beiden Seitenkanten der Blattfedern 1401 und 1403 in Richtung der Seitenkante aufeinander zu laufen, an der die Blattfedern 1401 und 1403 befestigt sind. Da die Hülse 7 ringförmig ausgebildet ist, erweist es sich bei dieser Ausgestaltung als vorteilhaft, dass die Seitenkante verkürzt ist, an der die Blattfedern 1401, 1403 befestigt sind. Dadurch können die Blattfedern 1401 und 1403 leichter um die jeweilige Seitenkante gebogen werden, an der die Blattfedern 1401 und 1403 befestigt sind. Sind diese Seitenkanten nicht verkürzt, lassen sich die Blattfedern durch die Krümmung der Seitenkante der Befestigung der Blattfedern auf einem Kreisbogen nur schwerer biegen. Es ist weiterhin zu sehen, dass die Seitenkanten der Blattfeder 1402 nicht aufeinander zu laufen. Durch diese Blattfeder 1402 ist in dem dargestellten Ausführungsbeispiel der Führungsstift 19 hindurch geführt. Um eine ausreichende Stabilität der Blattfeder 1402 insgesamt zu gewährleisten, laufen deren Seitenkanten daher nicht aufeinander zu. Die Zwischenelemente 1404 zwischen den Blattfedern 1401, 1402 und 1403 sind nicht elastisch gelagert sondern starr. Wird die Hülse 7 also derart verdreht, dass jeweils eines der Zwischenelemente 1404 in radialer Richtung außen an den Kugeln 12 anliegt, sind die Kugeln 12 daran gehindert, in radialer Richtung nach außen gedrückt zu werden.

Figur 12 zeigt einen Ausschnitt entsprechend einem Teil der Darstellung der Figuren 6 und 9, Figur 14 zeigt eine Draufsicht auf die Anordnung der Blattfedern nach der Figur 12 von oben und Figur 13 zeigt das Ausführungsbeispiel in einem Schnitt senkrecht zur Zeichnungsebene durch die Kugeln 12.

Es ist dabei ersichtlich, dass für die Lagerung der Kugeln 12 auch andere Ausgestaltungen möglich sind. Beispielsweise können die Blattfedern über den Kugeln 12 verbleiben, wobei dann lediglich die Hohlräume für die Bewegung der Blattfedern sowie Blockadeelemente, die ein Ausrücken der Blattfedern verhindern durch eine entsprechende Drehbewegung der Hülse 7 positioniert werden. Der Führungsstift 19 ist hierbei außerhalb der Blattfeder 1402 angeordnet.

## Patentansprüche

1. Steckanschluss mit einem Zuführanschlussteil (1) und einem kompatiblen Gegenanschlussteil, wobei das Zuführanschlussteil (1) und das Gegenanschlussteil zur Ausbildung des Steckanschlusses miteinander verbindbar sind, wobei bei hergestellter Verbindung des Steckanschlusses gasförmige Medien durch den Steckanschluss gefördert werden können, wobei der aus dem Zuführanschlussteil (1) und dem Gegenanschlussteil bestehende Steckanschluss eine erste Position aufweist, bei der das gasförmige Medium durch den Steckanschluss förderbar ist und in der das Zuführanschlussteil und das kompatible Gegenanschlussteil form- und/oder kraftschlüssig miteinander verbunden sind (12, 302; 12, 1404; 12, 1102), wobei der aus dem Zuführanschlussteil (1) und dem Gegenanschlussteil bestehende Steckanschluss eine zweite Position aufweist, bei der der Zuführanschluss des gasförmigen Mediums gesperrt ist (5, 6, 9, 10) und bei der das Gegenanschlussteil von dem Zuführanschlussteil (1) gelöst ist (12, 13, 301; 12, 501, 502; 12, 601, 602; 12, 801, 802; 12, 1101; 12, 1401, 1402, 1403),
**dadurch gekennzeichnet, dass** eine Zwischenposition zwischen der ersten Position und der zweiten Position vorhanden ist, in der der Zuführanschluss des gasförmigen Mediums gesperrt ist (5, 6, 9, 10) und in der das Gegenanschlussteil gegenüber der umgebenden Atmosphäre geöffnet ist (16, 17, 18, 19, 20), wobei das Zuführanschlussteil (1) und das Gegenanschlussteil in dieser Zwischenposition form-und/oder kraftschlüssig miteinander verbunden sind (12, 302; 12, 1404; 12, 1102).

2. Zuführanschlussteil (1), wobei das Zuführanschlussteil (1) Verbindungsmittel (2) aufweist zur Verbindung des Zuführanschlussteils (1) mit einer Zuführvorrichtung für gasförmige Medien, wobei das Zuführanschlussteil (1) Aufnahmemittel (11) aufweist zur Aufnahme eines Gegenanschlussteils, wobei dem Zuführanschlussteil (1) wenigstens ein Betätigungselement (7) zugeordnet ist, wobei in einer ersten Position des wenigstens einen Betätigungselementes (7) Blockademittel (12) der Aufnahmemittel (11) des Zuführanschlussteils (1) ein mechanisches Lösen eines in die Aufnahmemittel (11) eingesetzten Gegenanschlussteils verhindern, wobei in dieser ersten Position weiterhin Durchlassmittel geöffnet sind (5, 18, 16) zur Abgabe des gasförmigen Mediums über das Zuführanschlussteil (1) in ein eingesetztes Gegenanschlussteil, wobei in einer zweiten Position des wenigstens einen Betätigungselementes (7) das Zuführanschlussteil (1) gegen eine Abgabe des gasförmigen Mediums gesperrt ist (5, 6, 9, 10) und die Blockademittel (12) der Aufnahmemittel (11) gelöst sind (12, 13, 301; 12,501,502;12,601,602;12,801,802;12,1101;12,1401,1402,1403), **dadurch gekennzeichnet, dass** das wenigstens eine Betätigungsmittel (7) eine Zwischenposition aufweist, in der das Zuführanschlussteil (1) gegen eine Abgabe des gasförmigen Mediums gesperrt ist (5, 6, 9, 10), in der weiterhin die Blockademittel (12) der Aufnahmemittel (11) des Zuführanschlussteils (1) ein mechanisches Lösen eines in die Aufnahmemittel (11) eingesetzten Gegenanschlussteils verhindern (12, 302; 12, 1404; 12, 1102) und in der ein in die Aufnahmemittel (11) eingesetztes Gegenanschlussteil mit der umgebenden Atmosphäre verbunden ist (16, 18, 17, 19, 20).

3. Steckanschluss bzw. Zuführanschlussteil nach Anspruch 1 oder 2,
**dadurch gekennzeichnet, dass** die Überführung von der ersten Position in die zweite Position durch wenigstens ein Betätigungselement (7) erfolgt, wobei das wenigstens eine Betätigungselement (7) bei dieser Überführung von der ersten Position in die zweite Position einer Zwangsführung (201, 202) unterliegt derart, dass eine Überführung des Steckanschlusses von der ersten Position in die zweite Position nur über die Zwischenposition möglich ist.

4. Steckanschluss bzw. Zuführanschlussteil nach Anspruch 3,
**dadurch gekennzeichnet, dass** die Überführung von der ersten Position in die Zwischenposition durch eine erste Betätigung (201) erfolgt und dass die Überführung von der Zwischenposition in die zweite Position durch eine zweite Betätigung (202) erfolgt, wobei die erste und die zweite Betätigung voneinander getrennt sind.

5. Steckanschluss bzw. Zuführanschlussteil nach Anspruch 4,
**dadurch gekennzeichnet, dass** die Orientierung der Betätigungsrichtung der ersten Betätigung (201) unterschiedlich ist zur Orientierung der Betätigungsrichtung der zweiten Betätigung (202).

6. Steckanschluss bzw. Zuführanschlussteil nach Anspruch 4,
**dadurch gekennzeichnet, dass** eine der Betätigungen (201) einer Schiebebewegung in einer Richtung entspricht und die andere Betätigung (202) einer Drehbetätigung.

7. Steckanschluss bzw. Zuführanschlussteil nach Anspruch 6,
**dadurch gekennzeichnet, dass** die Drehung um eine Achse erfolgt, die der Richtung der Schiebebewegung entspricht.

8. Steckanschluss bzw. Zuführanschlussteil nach Anspruch 7,
**dadurch gekennzeichnet, dass** die erste Betätigung (201) der Schiebebewegung entspricht und die zweite Betätigung (202) der Drehbetätigung.

9. Steckanschluss bzw. Zuführanschlussteil nach einem der Ansprüche 3 bis 8,
**dadurch gekennzeichnet, dass** eine Betätigung des wenigstens einen Betätigungselementes (7) aus der ersten Position in die Zwischenposition in einer bestimmten Betätigungsrichtung (201) erfolgt und dass eine Betätigung des wenigstens einen Betätigungselementes (7) aus der Zwischenposition in der Gegenrichtung zu der bestimmten Betätigungsrichtung (201) eine Überführung des wenigstens einen Betätigungselementes (7) aus der Zwischenposition in die erste Position bewirkt.

10. Steckanschluss bzw. Zuführanschlussteil nach einem der Ansprüche 3 bis 9,
**dadurch gekennzeichnet, dass** eine Betätigung des wenigstens einen Betätigungselementes (7) aus der Zwischenposition in die zweite Position in einer definierten Betätigungsrichtung (202) erfolgt und dass eine Betätigung des wenigstens einen Betätigungselementes (7) aus der zweiten Position in der Gegenrichtung zu der definierten Betätigungsrichtung (202) eine Überführung des wenigstens einen Betätigungselementes (7) aus der zweiten Position in die Zwischenposition bewirkt.
